# EUROPEAN PATENT SPECIFICATION

(11) **EP 2 046 489 B1**
(45) Date of publication and mention of the grant of the patent: **29.08.2012**
(21) Application number: 07763776.7
(22) Date of filing: 13.07.2007
(51) Int. Cl.: B01D 65/02, B01D 61/22, B01D 65/08

(54) **IMPROVED MONOPERSULFATE TREATMENT OF MEMBRANES**
VERBESSERTE MONOPERSULFATBEHANDLUNG VON MEMBRANEN
TRAITEMENT DE MEMBRANES AU MONOPERSULFATE AMÉLIORÉ

(30) Priority: 14.07.2006 AU 2006903813
(43) Date of publication of application: 15.04.2009
(73) Proprietor: Siemens Industry, Inc., Alpharetta, GA 30005-4437 (US)
(72) Inventor: MULLER, Heinz-Joachim, Woy Woy, NSW 2256, (AU); WANG, Dongliang, Parramatta, NSW 2150 (AU); INGLIS, Andrew, John, Blakehurst, NSW 2221 (AU)
(74) Representative: French, Clive Harry
(86) International application number: PCT/AU2007/000979
(87) International publication number: WO 2008/006173

(56) References cited:
- WO-A-03/095078
- WO-A-2006/002479
- WO-A1-2007/006104
- WO-A1-2007/035987
- US-A- 4 618 533
- US-A- 6 159 369
- US-B2- 7 067 058

## Description

### FIELD OF THE INVENTION

The invention relates to a post-treatment process to treat hydrophobic/hydrophilic polymer blend membranes to control the water permeability thereof, and to treated membranes prepared by the method. The process is also suitable for cleaning polymeric membranes

### BACKGROUND ART

The following discussion is not to be construed as an admission of the state of the common general knowledge.

Synthetic polymeric membranes are known in the field of ultrafiltration (UF) and microfiltration (MF) for a variety of water filtration applications. The properties of the membranes depend upon the physical properties of the membrane i.e. the symmetry or asymmetry, pore shape, pore size, and on the chemical nature of the polymer and material used to form the membrane.

Particularly important is the hydrophilic or hydrophobic nature of the membrane.

Hydrophobic surfaces are defined as "water hating" while hydrophilic surfaces are defined as "water loving".

It is well recognized that the hydrophilic membranes generally suffer less adsorptive fouling than hydrophobic membranes. However, hydrophobic membranes usually offer better chemical, thermal and biological stability. In the development of water filtration membranes, there has been a long felt need to combine the low-fouling properties of hydrophilic polymers with the stability of hydrophobic polymers.

One approach to preparing porous polymeric membranes that possess the desirable properties of both hydrophilic and hydrophobic membranes has been simply to make various membranes from various blends of hydrophobic/hydrophilic polymers.

Previous processes for treating hydrophobic/hydrophilic blend membranes for increasing water permeability have been detailed, such as the treatment of poly(ethersulfone)/polyvinyl pyrrolidone membranes, polysulfone)/polyvinyl pyrrolidone membranes and polyvinylidene fluoride blend membranes with Cl₂ as disclosed in US 6,596,167, for example.

WO2006/002479 and US7067058 disclose a methods for hydrophilising membranes with mono-persutfate treatment.

The present applicant has also previously explored the use of other oxidative species, such as Fenton's agent, a source of hydroxyl radicals, in an attempt to increase water permeability of hydrophobic/hydrophilic membranes.

However, there remains in the art the need for a simple process to treat membranes to increase the water permeability. It is important that any such treatment does not diminish the mechanical or other chemical properties of the membrane. It is also important that the treatment be as cost effective as possible. Further, given the extensive use of porous polymeric membranes in water filtration, it is highly desirable if the treatment does not introduce the use of potentially toxic or environmentally unfriendly species into a membrane environment.

It is also highly desirable from an efficiency point of view if the processes for treating membranes can have other benefits, for example, in the cleaning of membranes.

### DESCRIPTION

According to a first aspect, the invention provides a method of hydrophilising a polymer comprising the step of contacting said polymer with a source of monopersulfate (contacting the polymer with HSO₅⁻) and a halide ion to render the polymer hydrophilic.

More specifically, the invention provides a method of improving the water permeability of a porous polymeric membrane comprising the step of contacting said porous polymeric membrane with a source of monopersulfate (contacting the porous polymeric membrane with HSO₅⁻) and a halide ion to render said polymer hydrophilic.

In another aspect, the invention provides a method of cleaning a porous polymeric membrane in need thereof comprising the step of contacting said porous polymeric membrane with a source of monopersulfate (contacting the porous polymeric membrane with HSO₅⁻) and a halide ion. The membrane may be fouled with organic matter, inorganic matter or a combination thereof.

More preferably, a source of monopersulfate, a halide ion and a buffer or base are used. Chloride ions are particularly preferred as the halide ions. Any buffer or base which can maintain pH above about 7 is suitable. For example, hydroxide may be used, and carbonates and bicarbonates are preferred examples of buffers. One particularly preferred embodiment of the method involves contacting the membrane with an aqueous solution of oxone (a persulfate source which has the formula 2KHSO₅.KHSO₄.K₂SO₄) sodium chloride and sodium bicarbonate.

The present applicants have disclosed the use of monopersulfate alone in treating membranes to increase their permeability and or clean them. Surprisingly, it has been found that by adding halide ions, such as chloride, a dramatic increase in the speed and efficiency of the process is observed, which can be further enhanced by way of the addition of a base or buffer.

Preferably the porous polymeric membrane is a microfiltration or ultrafiltration membrane.

Most preferably the polymeric membrane is prepared from a blend of a hydrophobic and a hydrophilic polymer.

Suitable hydrophobic polymers include fluoropolymers, polysulfone-like polymers, polyimides, polyacrylnitriles, polyvinylchloride and the like.

Most preferably the polymers are fluoropolymers such as polyvinylidene fluoride (PVdF) and PVdF copolymers.

In an alternative preferred embodiment, the hydrophobic polymers are polysulfone-like polymers such as polysulfone, polyethersulfone, and polyphenylsulfone.

Preferably in the hydrophobic/hydrophilic polymer blend, the hydrophilic polymers are polyvinyl pyrrolidone (PVP) and PVP copolymers, polyethylene glycol (PEG) polyethylene oxide, polyvinyl alcohol, polyacrylic acid and the like. Most preferably the hydrophilic polymers are water-soluble polyvinyl pyrrolidone (PVP) and PVP copolymers.

The porous polymeric membranes are preferably prepared from blends of hydrophobic and hydrophilic polymers. The ratio of hydrophobic polymer/hydrophilic polymer in the polymer blend prior to membrane preparation can be 10:1 to 0.5:1. Preferably, the ratio is 5:1 to 0.5:1, and even more preferably the ratio is 3:1 to 0.5:1. The ratio will usually be much greater in the final polymer, because the amount of hydrophilic polymer actually retained is less than the amount of hydrophobic polymer. If the membrane is hydrophilic, then some hydrophilic polymer has been retained. Usually, a higher starting proportion of hydrophilic polymer in the polymer blend will result in a higher level of incorporation in the final polymer.

Where hydrophobic/hydrophilic membranes, are discussed in the specification, it is to be understood that the hydrophilic polymer or copolymer is present in an amount sufficient to impart hydrophilicity to the membrane. For example, a PVdF/PVP porous polymeric membrane will have sufficient PVP to impart hydrophilicity to the membrane.

Preferred forms of the membrane are hollow fibre membrane, tubular membrane, or flat sheet membrane.

The membranes can be dry membranes, wet membranes or rewetted membranes. The membranes can be individual or arranged in bundles or modules such as hollow fibre modules or spiral wound modules.

Most preferably, the hydrophobic hydrophilic blend membranes are PVdF/PVP blend membranes or PVdF/PVP copolymer blend membranes. Preferably these membranes are formed by a phase inversion process, and most preferably by diffusion induced phase separation.

In one preferred embodiment, the membranes are treated immediately after casting or extrusion. Preferably the membranes are cast from PVdF/PVP (or PVdF/PVP copolymer) solvent dope which is contacted with a non-solvent in a quench bath and which is further washed in a wash bath to produce a nascent wet membrane.

In this preferred embodiment, the hydrophilising treatment is carried out on the nascent wet membrane. In this case, the nascent wet membrane is contacted with a source of monopersulfate in order to carry out the treatment process. Most preferably the monopersulfate is added as potassium monopersulfate, and is preferably in conjunction with potassium hydrogen sulfate and potassium sulfate. Preferably the concentration of monopersulfate is in the range of 0.1 wt% to 10wt%, and most preferably 0.2wt% to 5wt%.

Alternatively, the process can be carried out on a dry membrane. The dry membranes may be prepared by one of two processes, either by directly drying without pore filling agent treatment, or by first treating with a pore filling agent like glycerol and then drying.

The process may also be carried out on rewet membranes. These are membranes that have been dried (either with or without pore filling agent) and then rewetted with water or other liquid.

Additives can also be present in the monopersulfate/halide solution. Additives maybe added, for example, to enhance the oxidation of the hydrophilic polymer, or to otherwise catalyse the reaction. Suitable additives include organic acids and/or metal ions. Without wishing to be bound by theory, it is believed that the organic acids are responsible for enhancing the oxidizing ability for the hydrophilic polymer. The most preferred organic acid is citric acid. Without wishing to be bound by theory, it is believed that the metal ions are as catalyst for the monopersulfate for oxidizing or crosslinking the hydrophilic polymer. The most preferred metal ions are Ni²⁺, Cu²⁺ and Fe²⁺. The concentration of said additives can be between 0.01wt% and 1wt%, and most preferably in the range 0.05wt% to 0.5wt%.

Preferably the treatment carried out at a temperature of between 5°C and 95°C, and most preferably in the range of 15°C to 60°C.

Preferably the membrane is contacted with the monopersulfate/halide solution and is allowed to absorb the solution. Preferably the solution is allowed to contact the membrane for a period of at least one hour, preferably longer than two hours or in some cases greater than 10 hours at room temperature.

In an alternative preferred embodiment, the monopersulfate/halide solution is allowed to contact the membrane at temperatures over 40°C for times less than 1 hour.

According to another aspect the invention provides a hydrophilised polymer prepared by the method of the first aspect.

### DESCRIPTION OF FIGURES

Figure 1 shows permeability against time for PVdF fibres after various treatments.
Figure 2 shows permeability against time for PVdF/PVP fibres after various treatments
Figure 3 shows permeability against time for PVdF fibres after treatment with oxone and various buffers.

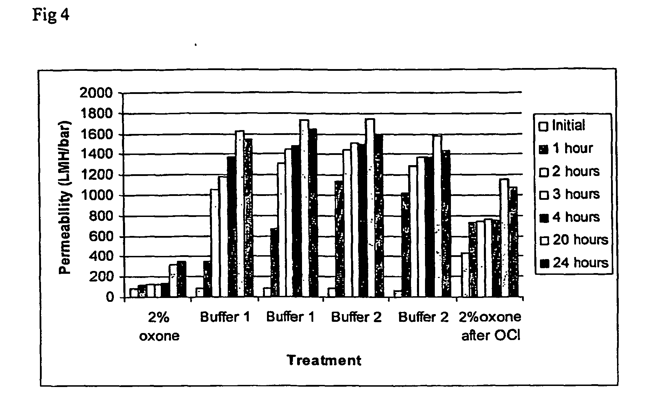

Figure 4 shows permeability against time for PVdF/PVP fibres after treatment with oxone and various buffers.
Figure 5 shows the permeability of fouled PVdF/PVP fibres over time after treatment at 21°C.
Figure 6 shows the permeability of fouled PVdF/PVP fibres over time after treatment at 4°C.
Figure 7 shows % increase of permeability against time for various oxone treatment regimes at 21°C.

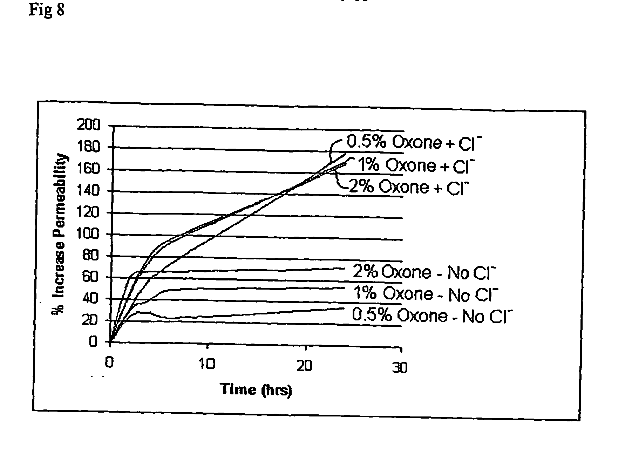

Figure 8 shows % increase of permeability against time for various oxone treatment regimes at 4°C.
Figure 9 shows changes in permeability as a function of chloride ion concentration.
Figure 10 shows membrane permeability variations against time for PVdF and PVdF/PVP membranes.
Figure 11 shows membrane permeability against time for PVdF membranes at different temperatures.
Figure 12 shows membrane permeability against time for PVdF/PVP membranes at different temperatures.

### THE BEST METHOD OF PERFORMING THE INVENTION

The invention will be described with respect to PVdF/PVP and PVdF/PVP copolymer blends, although it will be apparent to those skilled in the art that any blend of hydrophobic/hydrophilic polymer membrane can be used. The invention will also be described with reference to the use of one commercially available monopersulfate, Oxone^{®}, a proprietary Du Pont product which contains potassium monopersulfate, potassium hydrogen sulfate and potassium sulfate. However, it would be appreciated again by those skilled in the art that any suitable source of monopersulfate (HSO₅⁻)can be used. The invention will also be exemplified with respect to chloride ions as the halide ions and carbonate, bicarbonate and mixtures thereof as the base or buffer, although those skilled in the art will appreciate that these examples are non-limiting.

The active ingredient in Oxone^{®} is KHSO₅. Structurally, the monopersulfate ion is represented as follows:

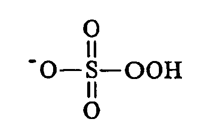

In solid form, Oxone^{®} exists as a triple salt of formula 2KHSO₅.KHSO₄.K₂SO₄

In preferred embodiments, a mixture of PVdF/PVP or a mixture of PVdF/PVP copolymer are prepared in the solvent in accordance with standard membrane preparation procedure and various additives are added as required to produce a membrane dope. The dope is then cast into a flat sheet membrane or extruded in to a - hollow fibre by way of a diffusion induced phase separation process i.e. the casting or extrusion takes place into a suitable non-solvent. Once the membrane is cast or extruded, the solvent and various additives used to facilitate production are removed by way of exchange with non-solvents in a quench bath and the membrane is then washed in a wash bath to produce a nascent wet membrane. The nascent wet membrane is typically then treated with a solution containing Oxone^{®}/chloride ions and optionally base or buffer, under predetermined conditions of concentration, temperature and time. Any pH can be used, but it is preferred that pH is maintained at pH 7 or above, and this may be maintained by the use of a base which also surprisingly potentiates the effect of the HSO₅⁻/Cl⁻ combination. It is known that the monopersulfate (HSO₅⁻) ion is more stable at low pH, and indeed this is the reason it is sold commercially as a triple salt, ie to ensure an acidic environment. Monopersulfate is in fact known to decompose in the presence of high pH, so its use in combination with a base is unusual. Any base can be used, for example, hydroxide ions, or more preferably carbonate or bicarbonate. These also have the advantage of helping control unwanted chlorine gas production.

In one preferred embodiment of the present invention, the membrane is first allowed to absorb the Oxone^{®}/chloride/base solution and the solution loaded membrane is then kept in a wet state for a period of greater than 10 hours at room temperature. This process is particular amenable to membranes for bundles or modules which can be immersed into the monopersulfate solution for a given time, then removed from the solution and simply kept wet for more than 10 hours.

However, as mentioned earlier, treatment time can be varied depending on the temperature. Suitable treatment times can range typically from half an hour to 24 hours depending on the temperature. A temperature of more than 40°C the time can be less than 1 hour. Preferably, additives of metal ions and organic ions are added to the Oxone^{®} solution to facilitate the treatment process. Once the membrane has been treated, it can then be dried. In one particular process, the wet membrane is simply dried directly without any pore filling agent treatment. In an alternative process, wet membranes are first treated with a pore filling agent like glycerol and then dried. The membranes can then be rewetted with water or other suitable liquid.

In addition to treating membranes to increase their permeability, monopersulfate/chloride solutions and monopersulfate/chloride/buffer solutions have also been found to be advantageous in the cleaning of ultrafiltration and microfiltration membranes. Typically, water containing solutes and precipitates is passed through a bank of semipermeable tubular membranes housed in a module, often at elevated pressures. The filtered water is drawn off and collected, leaving a residue of solid material in the membrane pores or on the unfiltered side of the membrane.

It is preferred that the pores of the membrane be kept relatively free of contaminants. As the amount of pore blockage increases, the filtration efficiency of the module decreases and the amount of pressure required to maintain a viable throughput of liquid increases. As pressure increases, the likelihood of membrane rupture becomes more significant.

In some cases, the water containing impurities is pre-treated with a flocculating agent prior to filtration to coagulate dispersed colloids into 'flocs'. Flocs have the advantage of entrapping smaller colloidal particles, thereby making filtration more efficient. They may also aid in the removal of dissolved particles. Under the influence of a flocculating agent, dissolved and suspended particles coagulate and precipitate from the water, thereby removing colour, and turbidity.

Thus, in practice, the filtrate containing the suspended particulate impurities, colloids, bacteria, flocs or the like is passed through the filtration unit under pressure, expelling filtered water and leaving the residue trapped within the unit, and more particularly on the waste side of the membrane and in the pores of the membrane. Flocs are particularly problematical in causing membrane blockage, and membrane performance gradually diminishes with use until it becomes necessary to clean the membranes. The extent of the problem depends upon the amount of impurity, the nature of the impurity and the type of the membrane.

'Backwashing', that is, running the current of water (or a gas) counter to the normal direction of flow, can dislodge some the contaminants from the membrane, however, it is difficult to achieve complete removal of particulate matter, especially when flocculants have been used.

Chemical cleans are therefore still useful.

Solutions of monopersulfate anions with halide ions, particularly solutions of Oxone® with chloride ions and a buffer or base such as carbonate or bicarbonate, have been found to be very useful in cleaning fouled membranes. The methods of the present invention can be used in conjunction with backwashing methodology, or as a standalone cleaning method suitable for carrying out "cleaning-in-place" (CIP). CIP involves cleaning the membrane module without removal from its normal *in situ* place of operation.

In general terms, one form of CIP cleaning involves isolating the module to be cleaned by means of taps and pipes and the like from fluid communication with the remainder of the system. The water or liquid normally filtered is then replaced with a cleaning fluid, in this case, an Oxone®/chloride/buffer solution. The Oxone®/chloride/buffer solution is then allowed to run through the membrane module to carry out the cleaning. The Oxone®/chloride/buffer solution may be recycled through the module, or allowed to pass through the module just once before being run off to waste, depending upon the particular requirements of the system and the amount of contaminants being removed.

The CIP procedure can take place at ambient temperatures or at controlled temperatures outside the normal range of filtration temperatures. The CIP can be carried out for varying lengths of time and at pressures outside the normal range of those used for filtration.

Once the cleaning is completed, the system is flushed to remove traces of the Oxone®/chloride/buffer solution before being returned to service by being reconnected to the normal fluid flow.

CIP can be carried out manually or by means of fully automated systems which activate in response to pressure differentials or after predetermined module operating times.

One example of a module that can be cleaned has banks of hollow fibre PVDF membranes housed in membrane modules as described in US 6,159,373, The module includes a shell within which is positioned a bundle containing from about 2800 to about 30,000 hollow fibres with a diameter of 500 µm to 650 µm and a lumen diameter of 250 µm to 310 µm, with a pore size of 0.2 µm, but these sizes may be varied as required. Membrane and module configurations different from the one described above may also be employed with the methods of preferred embodiments, as will be appreciated by one skilled in the art.

At each end of the fibre bundle, a potting compound holds the ends of the fibres in place without blocking the lumens and closes off each end of the module. The liquid feed is pumped into the module, between the shell and the outside of the hollow fibres. Some of the feed liquid passes into the lumen of the fibres, being filtered as it does so. The clean liquid then concentrates in the inside of the lumen, and flows, or is drawn off and taken outside the module, as a clarified liquid.

In one form of the CIP treatment, the Oxone®/chloride/buffer solution is introduced in place of the untreated liquid stream. However, those skilled in the art will realize that the flow could be introduced counter to that normally used.

The results obtained showed that treatment with a Oxone®/chloride/buffer solution could clean fouled membranes such that their permeability was returned to, or close to, pre fouling levels.

### EXAMPLES

Membrane permeabilities are given in units of LMH/bar (=LMH/100kPa), which is familiar to those skilled in the art, and represents the flux of pure water through the membrane in terms of the number of litres (L) per square metre (M) of membrane per hour (H) at 1 bar driving pressure (bar).

### EXAMPLE 1- Buffered Oxone/Chloride

Membrane bundles were placed in treatment solutions which had the compositions as shown in Table 1. The permeabilities were measured at 1, 2, 4, and 72 hour intervals.

**TABLE 1: Buffered Oxone/Chloride Compositions**

| **Fibre** | Treatment |
|---|---|
| PVdF | 1000 ppm OCI |
| PVdF | 2wt% Oxone/ 0. 1wt% NaCl/ 0.83 wt% Na₂CO₃/ 0.84wt% NaHCO₃ |
| PVdF | 2 wt% Oxone/ 0.0027wt% Co(C₂H₃O₂).4H₂0/ 0.003 wt% FeSO₄.7H₂O |
| PVdF | 2 wt% Oxone/ 0.0027wt% Co(C₂H₃O₂).4H₂O/ 0.83 wt% Na₂CO₃/ 0.84wt% NaHCO₃ |
| PVdF/PVP | 1000 ppm OCl |
| PVdF/PVP | 2wt% Oxone/ 0.1wt% NaCl/0.83 wt% Na₂CO₃/ 0.84wt% NaHCO₃ |
| PVdF/PVP | 2 wt% Oxone/ 0.0027wt% Co(C₂H₃O₂).4H₂0/ 0.003 wt% FeSO₄.7H₂O |
| PVdF/PVP | 2 wt% Oxone/ 0.0027wt% Co(C₂H₃0₂).4H₂O/ 0.83 wt% Na₂CO₃/ 0.84wt% NaHCO₃ |

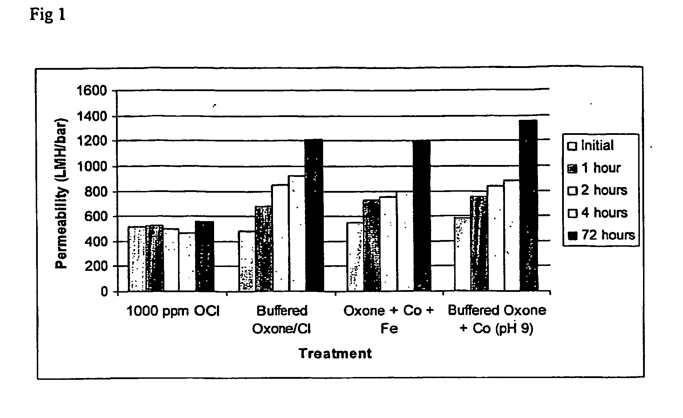

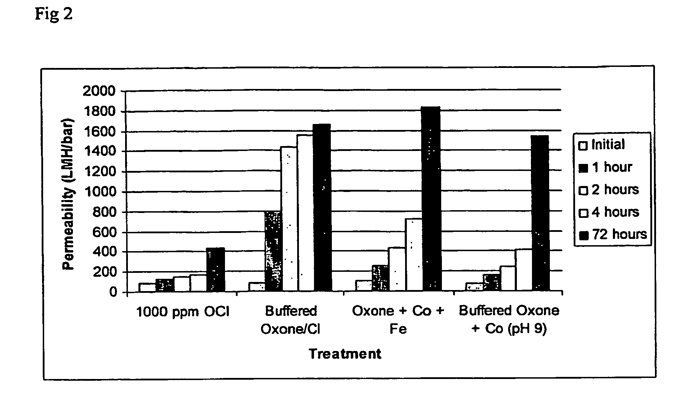

The results are shown in figure 1 (permeability versus time for PVdF fibres) and figure 2 (permeability versus time for PVdF/PVP fibres) and strongly suggest that an oxone/sodium chloride solution buffered to pH 9-10 is extraordinarily successful in improving the permeability of both PVdF and PVdF/PVP in a much shorter time frame than conventional treatments.

Oxone in combination with chloride works very well but there are occupational health and safety issues concerning toxic chlorine gas evolution. Buffering the solution was found to ameliorate the issue of chlorine evolution, but more surprisingly, was found to produces extremely good results in terms of improved permeability after just 2 hours treatment time.

Another option that was tested was to combine oxone with both cobalt (II) and iron (II). It has been established in the literatur¹ that Co (II) oxidises to Co(III) in the presence of oxone to produce sulfate radicals and that Co(III) reduces to Co(II) with oxone to produce peroxymonosulfate radicals. It is believed that the sulfate radical is the powerhouse behind the reactions that improve permeability. However, the peroxymonosulfate radical is much weaker than the sulfate radical, thus it is assumed that it has negligible contribution to the reaction scheme. It was then decided to add Fe(II) in an attempt to reduce Co(III) to Co(II) so that more sulfate radicals were produced from the oxone. This treatment performed well for the PVdF fibres.

### EXAMPLE 2 - Buffers

Because of the surprising enhancement in permeability provided by the addition of a buffer such as carbonate or bicarbonate, this aspect was pursued in more detail. The membrane bundles were placed in treatment solutions, which had compositions as shown in Table 2. The permeabilities were measured at 1, 2, 3, 4, 20 and 24 hour intervals.

**TABLE 2 Buffer Solution Compositions**

| **Sample** | **Treatment** |
|---|---|
| PVdF | Oxone |
| PVdF | Buffer 1- 0.83wt% CO₃²⁻, 0.84wt% HCO³⁻, NaCl 0.1wt%, Oxone 2% |
| PVdF | Buffer 1- 0.83wt% CO₃²⁻, 0.84wt% HC0³⁻, NaCl 0.1wt%, Oxone 2% |
| PVdF | Buffer 2 - 0.75wt% CO₃²⁻, -, NaCl 0.1wt%, Oxone 2% |
| PVdF | Buffer 2 - 0.75wt% CO₃²⁻, NaCl 0.1wt%, Oxone 2% |
| PVdF | Oxone after 1000ppm OCl |
| PVdF/PVP | Oxone |
| PVdF/PVP | Buffer 1- 0.83wt% CO₃²⁻, 0.84wt% HCO³⁻, NaCl 0.1wt%, Oxone 2% |
| PVdF/PVP | Buffer 1- 0.83wt% CO₃²⁻, 0.84wt% HCO³⁻, NaCl 0.1wt%, Oxone 2% |
| PVdF/PVP | Buffer 2 - 0.75wt% CO₃²⁻, ⁻, NaCl 0.1 wt%, Oxone 2% |
| PVdF/PVP | Buffer 2 - 0.75wt% CO₃²⁻, ⁻, NaCl 0.1wt%, Oxone 2% |
| PVdF/PVP | Oxone after 1000ppm OCl |

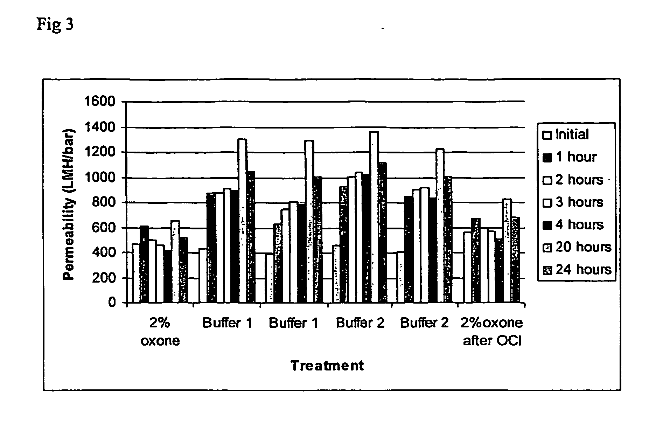

The results are shown in figures 3 (PVDF fibres) and 4 (PVdF/PVP fibres) and illustrate that the buffered oxone/chloride treatment drastically improves the permeability of both PVdF and PVdF/PVP fibres in a relatively short period of time.

Buffer 1 and Buffer 2 both had an initial pH of 9-9.5. After 1 hour, the pH of Buffer 1 dropped to 8.2 and that of Buffer 2 dropped to 7.7. After 24 hours, the pH of Buffer 1 was 8.5 and that of Buffer 2 was 7.5. Thus, over a 24 hour period, the pH of the solutions remained above 7, which is sufficient to safeguard against chlorine gas evolution. Additionally, these results show that it is sufficient just to add the carbonate to achieve the desired buffer effect rather than both carbonate and bicarbonate.

This demonstrates that a solution of oxone (2wt %) and sodium chloride (0.1 wt%) buffered to a pH of 9-10 using sodium carbonate significantly improves the permeability (> 1000LMH/bar) of both PVdF/PVP and PVdF fibres in a relatively short time frame (2-4 hours compared to 24 hours). The optimum treatment time is generally of the order of 4-12 hours; and ideally the pH of the solution should be monitored to ensure alkaline conditions are maintained.

Mechanism of action of preferred (Enhanced) treatment.

The preferred treatment of the present invention is inherently complex mechanistically. Without wishing to be bound by theory, the applicant provides the following general guide to the main reactions that take place.

The composition of the preferred treatment solution is: 0.75wt% Na₂CO₃, 0.1wt% NaCl and 2wt% Oxone (2KHSO₅.KHSO₄.K₂SO₄) in water.

The main reactions occurring in the treatment solution are as follows:

HSO₅⁻(aq) + Cl⁻(aq) → HSO₄⁻_{(aq)} + ClO⁻_{(aq)} (1)

HSO_{4(aq)} + H₂O → SO₄²⁻_{(aq)} + H₃O⁺_{(aq)} (2)

ClO⁻ _{(aq)}+ H₃O⁺_{(aq)} → HClO_{(aq)} + H₂O (3)

ClO⁻ _{(aq)}+ [Substrate (red)] → Cl⁻_{(aq)} + [Substrate (ox)] (4)

HClO _{(aq)}+ Cl⁻_{(aq)} + H₃O⁺_{(aq)} → Cl_{2(aq)} + 2H₂O (5)

Cl_{2(aq)} → Cl_{2(g)} (6)

CO₃²⁻ _{(aq)}⁺ H₃O⁺_{(aq)} ←→ HCO_{3 (aq)}⁺ H₂O (7)

HCO₃⁻ (aq)⁺ H₃O⁺ _{(aq)} ←→ CO_{2 (aq)} + 2H₂O (8)

CO_{2 (aq)} ←→ CO_{2(g)} (9)

As can be discerned from the scheme above, it would be very difficult to develop an accurate mechanistic, kinetic and thermodynamical model for the treatment methods of the present invention, so any conclusions made are based upon reasonable assumptions that must be treated with an appropriate amount of care.

Reactions 1-4 represent the oxidative cycle. Reactions 7-9 represent the buffering action that keeps the pH of the solution within a safe range. Reactions 5-6 represent the key safety concern of the present method, which is the release of toxic chlorine gas.

Generally, the solubility of chlorine gas in the treatment solution is largely affected by pH and temperature.

pH controls the equilibrium of reaction 5 which is concerned with chlorine evolution. Solutions of lower pH have a higher concentration of hydronium ions (H₃O⁺) and an excess of such species causes equilibrium (5) to shift to the right, thus producing more chlorine gas in solution. Ionic strength, temperature and other physical properties determine the position of equilibrium (6) and thus what quantity of the chlorine generated stays in solution and what quantity evolves as a gas.

It is recommended that the pH of the treatment solution should be maintained above 7 (neutral) at all times, and this is ensured by the presence of a buffer. The initial pH of the treatment solution using the preferred carbonate or bicarbonate buffers is 9-10. Throughout the course of treatment, the pH has been observed to drop to about 8. Although the pH is chemically controlled, it would be unwise to proceed with a course of treatment without monitoring the pH. In the unlikely event that the pH falls below 7, sodium carbonate should be added to the solution until the pH reaches a safe level. It is also recommended that the temperature of the process involving chloride enhanced oxone treatment be kept below 50°C, to minimise the possibility of chlorine gas being forced out of solution.

### EXAMPLE 3 Cleaning of fouled membranes

Three versions of the treatment solution were prepared with oxone content 2wt%, 1.06wt% and 0.5wt% respectively. The treatments were applied to fouled polymeric hollow fibre membranes over a 24 hour period at both room temperature (21°C) and refrigerated temperature (<4°C).

Polymeric hollow fibre membranes that had been fouled by in use application were treated at both 21°C and < 4°C with three different oxone-chloride-bicarbonate solutions. The composition of the solutions prepared is shown in Tables 3,4 and 5:

**TABLE 3:2% oxone/Cl composition**

| **Component** | **wt%** |
|---|---|
| **Na₂CO₃** | 0.75 |
| **NaCl** | 0.1 |
| **Oxone** | 2 |
| **Water** | 97.15 |
| **Total** | 100 |

**TABLE 4:1.06% oxone/Cl composition**

| **Component** | **wt%** |
|---|---|
| **Na₂CO₃** | 0.59 |
| **NaCl** | 0.10 |
| **Oxone** | 1.06 |
| **Water** | 98.24 |
| **Total** | 100 |

**TABLE 5: 0.5% oxone/Cl composition**

| **Component** | **wt%** |
|---|---|
| **Na₂CO₃** | 0.3 |
| **NaCl** | 0.1 |
| **Oxone** | 0.5 |
| **Water** | 99.1 |
| **Total** | 100 |

1.06 wt% Oxone was chosen as it produced an equimolar mixture of chloride and oxone.

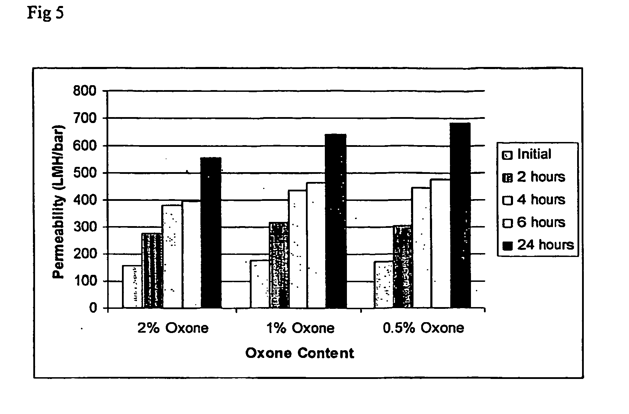

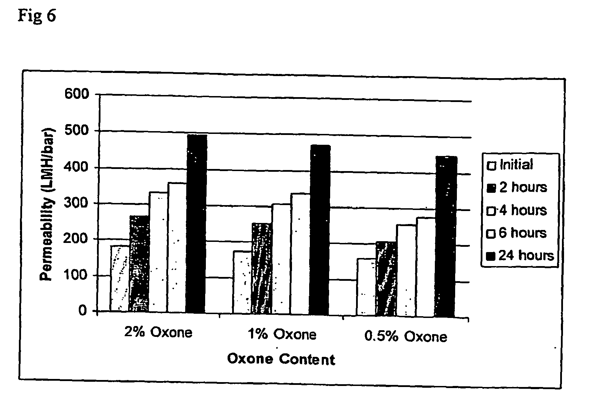

The permeabilities of the fibres were tested at time = 0, 2, 4, 6, and 24 hours, and the results are shown for fouled PVDF/PVP fibres at 21°C in figure 5 and for fouled PVDF/PVP fibres at < 4°C in figure 6.

At 21°C and at <4°C, all the solutions performed comparably at the various time intervals allocated for treatment.

The 0.5% solution under refrigerated conditions was observed to have partially frozen at one point between 12 and 24 hours, but this appears not to have affected the performance of the solution compared to the other refrigerated samples.

The oxone content of the treatment solution may be reduced to 0.5 wt% (down from 2 wt %) without debilitating performance. In doing so, the carbonate content may also be reduced, which leads to a cheaper, safer and better performing solution.

Fouled PVDF/PVP hollow fibre membranes were treated over a 24 hour period with solutions containing 0.5wt%, 1.06 wt% or 2wt% oxone with 0.1wt% chloride, as per the formulae in Tables 3,4 and 5, and also with solutions containing oxone-only at various concentrations. The treatments were performed at both room temperature (21°C) and refrigerated temperature (<4°C) to simulate possible conditions out in the field. Each sample was performed in duplicate. The results reported are the averaged values.

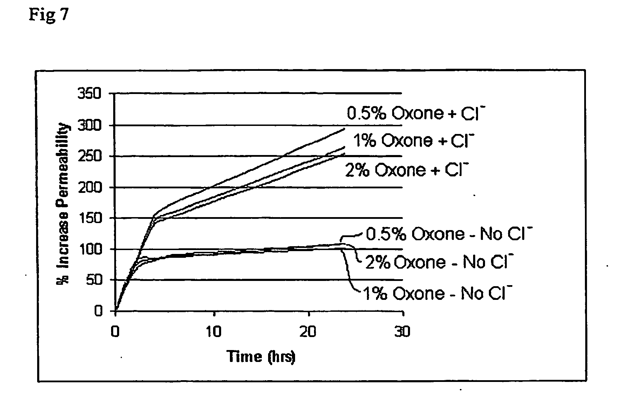

The results are shown in the kinetic profiles in figures 7 (at 21°C) and 8 (at < 4°C). It was observed that over the first two hours (at 21°C), both treatments caused permeability to increase at comparable rates (36.8hr⁻¹). However, after 2 hours, the rate at which the oxone-only treatment proceeded dropped to 1 hr⁻¹, whereas the rate of the oxone plus chloride treatment continued at 36.8 hr⁻¹ and then dropped to 6 hr⁻¹ at 4 hours.

The oxone-only treated samples achieved a 100% increase in permeability at 24 hours. The oxone plus chloride treated samples achieved an even better increase of >250% in permeability at 24 hours.

The variance of oxone content did not have a discernible affect upon the rate of reaction at 21°C.

The oxone content did have discernible affect on the rates of reaction at <4°C. The effect was more significant in the oxone-only treatment than the oxone plus chloride treatment. The oxone-only treated samples achieved a 30-70 % increase in permeability at 24 hours, whereas the oxone plus chloride treated samples exhibited an increase in permeability of >160 % at 24 hours.

For cleaning purposes, the treatment solution may include an oxone content of as low as 0.5 wt% without compromising its effectiveness.

Interestingly, over 24 hours, the oxone-only reaction profiles plateau at around the to 4- 6 hour mark, indicative of a rate retardation so severe that the reaction effectively ceases. Conversely, the oxone + chloride profiles continue with a substantial rate, with no sign of a plateau within 24 hours. These reaction rates are tabulated below.

**TABLE 6 : Reaction Rate Summary**

| | | | Rate of Reaction (hr⁻¹) at given time (hrs) | | |
|---|---|---|---|---|---|
| **Fibre** | **T** | **Treatment** | **2** | **6** | **24** |
| PVDF/PVP | 21 °C | Oxone/Cl - 2% | 35.40 | 5.59 | 5.59 |
| PVDF/PVP | 21° C | Oxone/Cl - 1 % | 36.53 | 5.79 | 5.79 |
| PVDF/PVP | 21° C | Oxone/Cl - 0.5% | 38.93 | 6.75 | 6.75 |
| | | | | | |
| PVDF/PVP | 21° C | Oxone - 2% | 40.31 | 1.10 | 1.10 |
| PVDF/PVP | 21°C | Oxone - 1% | 36.76 | 0.74 | 0.74 |
| PVDF/PVP | 21° C | Oxone - 0.5% | 32.95 | 1.15 | 1.15 |
| | | | | | |
| PVDF/PVP | < 4°C | Oxone/Cl - 2% | 20.31 | 4.27 | 4.27 |
| PVDF/PVP | < 4°C | Oxone/Cl - 1 % | 18.92 | 4.62 | 4.62 |
| PVDF/PVP | < 4°C | Oxone/Cl - 0.5% | 14.76 | 5.94 | 5.94 |
| | | | | | |
| PVDF/PVP | < 4°C | Oxone - 2% | 30.30 | 0.30 | 0.30 |
| PVDF/PVP | < 4°C | Oxone -1% | 15.00 | 0.57 | 0.57 |
| PVDF/PVP | < 4°C | Oxone - 0.5% | 11.91 | 0.47 | 0.47 |

In other words, based on this data, at 21°C a 2% oxone solution would take about 175 hours to reach the same level of permeability increase as a 2 % oxone - Cl solution would achieve in 24 hours, assuming that the rate of reaction of the oxone-only solution remains constant after 24 hours.

### Example 4 - Effect of Chloride concentration

The effects of chloride concentration were investigated. While good results were obtained using treatment solutions including 0.5 wt% oxone and 0.05 wt% sodium chloride, in some cases, due to safety concerns regarding chlorine evolution, it may be desirable to further minimise the chloride content.

The 8 hr total weight average (TWA) exposure limit for chlorine gas is 1ppm, so the treatment conditions should ideally be optimised to find a balance between performance, reaction time and chlorine evolution.

At the highest concentration of chloride (0.05wt%), 1 kilogram of treatment solution contains 0.5g of sodium chloride. As a conservative and safety-conscious estimate, it will be assumed that all chloride in solution can potentially escape as chlorine gas. Thus, at 25°C and atmospheric pressure, 1 kg of treatment solution can release about 0.1L of chlorine gas.

Thus if this chlorine were to escape into 1m³ of air, the chlorine concentration will rise to 0.3ppm.

(PVdF/PVP) hollow fibres membranes were potted and their initial permeabilities measured. The bundles were then placed in treatment solutions which had the following compositions as per Table 7:

**TABLE 7: Varying Chloride Ion Concentrations**

| **Sample** | **[Oxone]/%** | **[Cl]/%** |
|---|---|---|
| **1** | 0.5 | 0.050 |
| **2** | 0.5 | 0.035 |
| **3** | 0.5 | 0.025 |
| **4** | 0.5 | 0.017 |
| **5** | 0.5 | 0.012 |
| **6** | 0.5 | 0.008 |
| **7** | 0.5 | 0.006 |
| **8** | 0.5 | 0.004 |

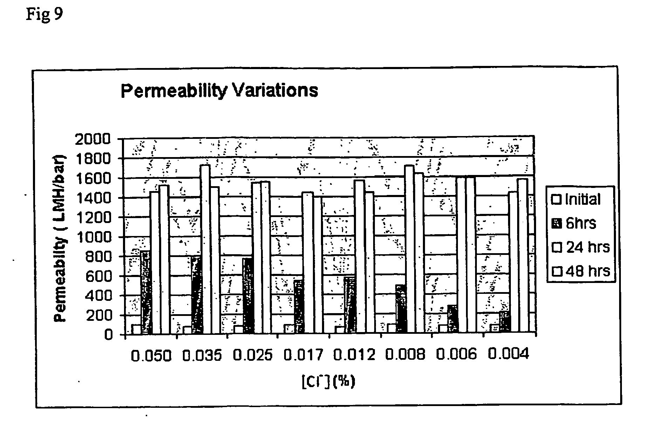

The permeabilities of the fibres were then measured at six, twenty-four and forty-eight hour intervals. The results can be seen in figure 9.

At six hours there is a definite decline in permeability which correlates with a lower chloride content. However, at both twenty-four and forty-eight hours, the permeabilities seem to be independent of chloride content.

These results suggest that the rate of reaction is proportional to the chloride content, and that the reaction appears to stop (or proceeds at a negligible rate) at some time between six and twenty-four hours.

There thus appears to be a wide range of chloride concentrations within which the treatment can work effectively over a twenty-four hour period. If twenty-four hours is acceptable then a solution containing 0.5 wt% oxone and as slow as 0.004 wt% sodium chloride be used. Otherwise, a higher chloride concentration may be used to achieve the desired results within a shorter time frame ie 6 hours.

### Example 5 - Low Temperature Treatment

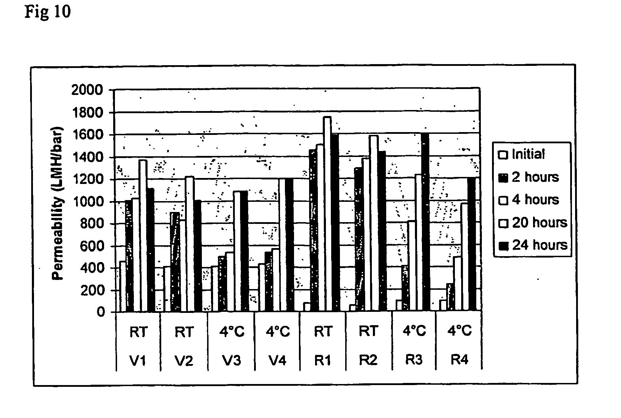

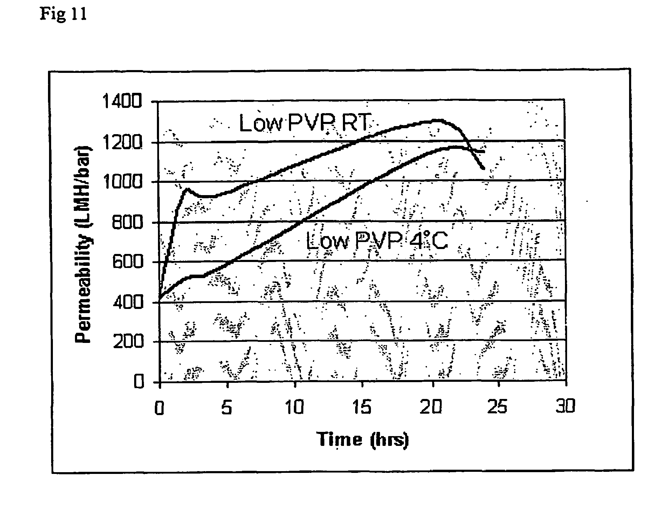

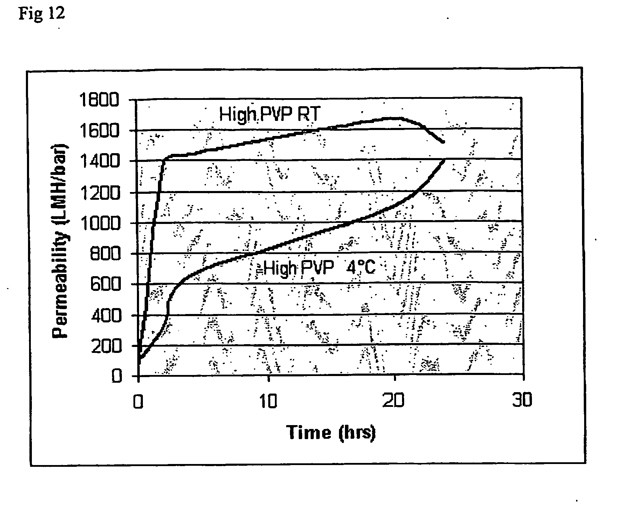

PVdF and PVdF/PVP fibres were subjected to treatment with a solution containing 2wt% oxone, 0.1 wt% NaCl and 0.75 wt% Na₂CO₃.at 21°C (ambient temperature) and at 4°C (refrigerated temperature) over a period of 24 hours. The permeabilities of the fibres were measured at time = 0, 2, 4, 20 and 24 hours and the results can be seen in Figs 10, 11 and 12. Figure 10 shows membrane permeability variations with time for PVdF membranes (V1- V4) and PVdF/PVP membranes (R1-R4). Figure 11 shows rate of reaction for PVdF membranes and fig 12 shows rate of reaction for PVdF/PVP membranes.

It was observed that over the first two hours, the reaction on the PVdF fibres proceeded, on average, 5.4 times faster at room temperature than at 4°C. For the PVdF/PVP fibres, the reaction appeared to proceed 5.5 times faster (on average) at room temperature than at 4°C.

After 24 hours of treatment, there is no appreciable difference between treating at 4°C and room temperature (21°C).

As can be deduced, the permeability vs. time data gives an idea of the kinetics of the overall reaction that takes place with the fibres. There appears to be a tendency of the reaction rate to plateau, with an expectation that the permeability of the fibres will oscillate (due to experimental error) about some final value.

During the first 2 hours, the reduction in rate due to the lower temperature is comparable in both the PVdF and PVdF/PVP fibres.

More importantly, after a period of 24 hours, the permeability of both the PVdF and PVdF/PVP fibres treated at 4°C were comparable to that of those treated at room temperature.

### EXAMPLE 6 - Membrane Modifications to Increase Permeability

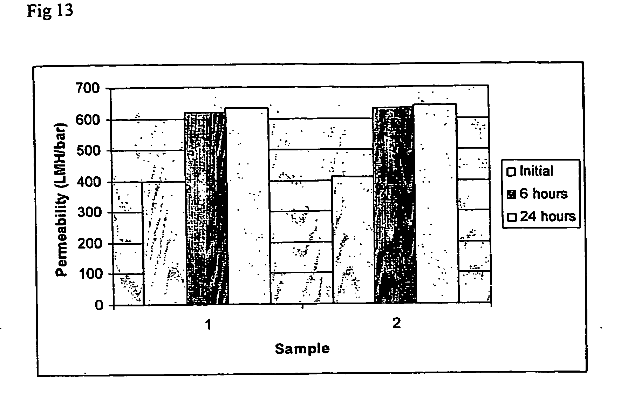

Potted PVdF/PVP fibres which had been modified by pre-treatment with persulfate were measured for their permeability and then treated with Oxone®/chloride/buffer solution for 6 hours and 24 hours. The results are shown in Figure 13

The obtained results reveal that the permeability of the persulfate pre-treated PVdF/PVP fibres increased by about 54% over a 6 hour period and 57% over a 24 hour period. The Oxone®/chloride/buffer solution treatment is thus more effective than treatment alone, as it can further increase the permeability of membranes already treated with persulfate alone.

When a trial was performed on a large membrane bioreactor module containing a very large (around 7000 individual hollow fibres) array of persulfate pre-treated hollow fibres, the permeability of the module rose from 147 LMH/bar to 220 LMH/bar (a 50 % increase). This is comparable to the lab-scale experimental data and indicates significant scale up of the process is viable.

## Claims

1. A method of improving the water permeability of a porous polymeric membrane and/or cleaning a porous polymeric membrane comprising the step of contacting said porous polymeric membrane with a source of monopersulfate and a halide ion.

2. A method according to claim 1 including contacting the porous polymeric membrane contemporaneously with a source of monopersulfate, a halide and a base.

3. A method according to any one of the preceding claims wherein the polymeric membrane is prepared from a blend of a hydrophobic and a hydrophilic polymer.

4. A method according to claim 3 wherein the hydrophobic polymer is selected from the group consisting of fluoropolymers, polysulfone-like polymers, polyimides, polyacrylnitriles and polyvinylchloride.

5. A method according to claim 4 wherein the hydrophobic polymer is a fluoropolymer selected from the group consisting of polyvinylidene fluoride (PVdF) and PVdF copolymers.

6. A method according to claim 4 wherein the hydrophobic polymer is a polysulfone-like polymer selected from the group consisting of polysulfone, polyethersulfone, and polyphenylsulfone.

7. A method according to claim 3 wherein the hydrophilic polymer is selected from polyvinyl pyrrolidone (PVP) and PVP copolymers, polyethylene glycol (PEG) polyethylene oxide, polyvinyl alcohol and polyacrylic acid.

8. A method according to any one of the preceding claims wherein the polymeric membrane is a PVdF/PVP blend membrane or a PVdF/PVP copolymer blend membrane.

9. A method according to any one of the preceding claims wherein the porous polymeric membrane is treated immediately after casting or extrusion.

10. A method according to claim 9 wherein the polymeric membrane is treated as a nascent wet membrane.

11. A method according to any one of the preceding claims wherein the source of monopersulfate is potassium monopersulfate in conjunction with potassium hydrogen sulfate and potassium sulphate, preferably a triple salt of formula KHSO_{S}.KHSOa.KZSOa.

12. A method according to any one of the preceding claims wherein the concentration of monopersulfate is in the range of 0.1wt% to 10wt.

13. A method according to claim 12 wherein the concentration of monopersulfate is in the range of 0.2wt% to 5wt%.

14. A method according to any one of the preceding claims wherein the porous polymeric membrane is treated with monopersulfate in the presence of 0.004% to 0.5% chloride ions.

15. A method according to claim 14 wherein the porous polymeric membrane is treated with monopersulfate in the presence of 0.004% to 0.1% chloride ions.

16. A method according to any one of the preceding claims wherein the step of contacting said porous polymeric membrane with a source of monopersulfate and a halide ion further comprises contacting said porous polymeric membrane with a buffer or base selected from bicarbonate, carbonate or mixtures thereof.

17. A method according to any one of the preceding claims wherein the monopersulfate solution further includes an additive, preferably an organic acid such as citric acid and/or a metal ion, such as Ni²⁺, Cu²⁺ and Fe²⁺.

18. A method according to claim 17 wherein additive is an organic acid and/or a metal ion.

19. A method according to any one of the preceding claims carried out at a temperature of between 5°C and 95°C.

20. A method according to any one of the preceding claims carried out at a temperature of between 15°C to 60°C.

21. A method according to any one of the preceding claims wherein the membrane is contacted with the monopersulfate/halide solution and is allowed to absorb the solution.

22. A method according to any one of the preceding claims wherein the halide ion is a chloride ion.

23. A hydrophilised porous polymer preparable by the method according to any one of the preceding claims.

## Patentansprüche

1. Verfahren zur Verbesserung der Wasserdurchlässigkeit einer porösen Polymermembran und/oder Reinigen einer porösen Polymermembran, welches den Schritt des Inkontaktbringens der besagten porösen Polymermembran mit einer Quelle von Monopersulfat und einem Halidion umfasst.

2. Verfahren nach Anspruch 1, welches das Inkontaktbringen der porösen Polymermembran gleichzeitig mit einer Quelle von Monopersulfat, einem Halid und einer Base aufweist.

3. Verfahren nach einem der vorhergehenden Ansprüche, wobei die Polymermembran aus einer Mischung eines hydrophoben und eines hydrophilen Polymers hergestellt wird.

4. Verfahren nach Anspruch 3, wobei das hydrophobe Polymer aus der Gruppe ausgewählt ist, die aus Fluorpolymeren, polysulfonartigen Polymeren, Polyimiden, Polyacrylnitrilen und Polyvinylchlorid besteht.

5. Verfahren nach Anspruch 4, wobei das hydrophobe Polymer ein Fluorpolymer ist, das aus der Gruppe ausgewählt ist, die aus Polyvinylidenfluorid (PVDF) und PVDF-Copolymeren besteht.

6. Verfahren nach Anspruch 4, wobei das hydrophobe Polymer ein polysulfonartiges Polymer ist, das aus der Gruppe ausgewählt ist, die aus Polysulfon, Polyethersulfon und Polyphenylsulfon besteht.

7. Verfahren nach Anspruch 3, wobei das hydrophile Polymer aus Polyvinylpyrrolidon (PVP) und PVP-Copolymeren, Polyethylenglykol (PEG), Polyethylenoxid, Polyvinylalkohol und Polyacrylsäure ausgewählt ist.

8. Verfahren nach einem der vorhergehenden Ansprüche, wobei die Polymermembran eine Membran aus einer PVDF/PVP-Mischung oder eine Membran aus einer PVDF/PVP-Copolymer-Mischung ist.

9. Verfahren nach einem der vorhergehenden Ansprüche, wobei die poröse Polymermembran unmittelbar nach dem Gießen oder der Extrusion behandelt wird.

10. Verfahren nach Anspruch 9, wobei die Polymermembran als eine naszierende feuchte Membran behandelt wird.

11. Verfahren nach einem der vorhergehenden Ansprüche, wobei die Quelle von Monopersulfat Kaliummonopersulfat in Verbindung mit Kaliumhydrogensulfat und Kaliumsulfat ist, vorzugsweise ein Dreifachsalz mit der Formel KHSO₅.KHSO₄.K₂SO₄.

12. Verfahren nach einem der vorhergehenden Ansprüche, wobei die Konzentration von Monopersulfat im Bereich von 0,1 Gew.-% bis 10 Gew.-% liegt.

13. Verfahren nach Anspruch 12, wobei die Konzentration von Monopersulfat im Bereich von 0,2 Gew.-% bis 5 Gew.-% liegt.

14. Verfahren nach einem der vorhergehenden Ansprüche, wobei die poröse Polymermembran mit Monopersulfat in Gegenwart von 0,004 % bis 0,5 % Chloridionen behandelt wird.

15. Verfahren nach Anspruch 14, wobei die poröse Polymermembran mit Monopersulfat in Gegenwart von 0,004 % bis 0,1 % Chloridionen behandelt wird.

16. Verfahren nach einem der vorhergehenden Ansprüche, wobei der Schritt des Inkontaktbringens der besagten porösen Polymermembran mit einer Quelle von Monopersulfat und einem Halidion ferner das Inkontaktbringen der besagten porösen Polymermembran mit einem Puffer oder einer Base umfasst, die aus Bikarbonat, Karbonat oder Mischungen davon ausgewählt ist.

17. Verfahren nach einem der vorhergehenden Ansprüche, wobei die Monopersulfat-Lösung ferner einen Zusatzstoff enthält, vorzugsweise eine organische Säure, wie etwa Citronensäure, und/oder ein Metallion, wie etwa Ni²⁺, Cu²⁺ und Fe²⁺.

18. Verfahren nach Anspruch 17, wobei der Zusatzstoff eine organische Säure und/oder ein Metallion ist.

19. Verfahren nach einem der vorhergehenden Ansprüche, das bei einer Temperatur von zwischen 5 °C und 95 °C durchgeführt wird.

20. Verfahren nach einem der vorhergehenden Ansprüche, das bei einer Temperatur von zwischen 15 °C und 60 °C durchgeführt wird.

21. Verfahren nach einem der vorhergehenden Ansprüche, wobei die Membran mit der Monopersulfat-Halid-Lösung in Kontakt gebracht wird und es ermöglicht wird, dass sie die Lösung absorbiert.

22. Verfahren nach einem der vorhergehenden Ansprüche, wobei das Halidion ein Chloridion ist.

23. Hydrophilisiertes poröses Polymer, welches durch das Verfahren nach einem der vorhergehenden Ansprüche herstellbar ist.

## Revendications

1. Procédé d'amélioration de la perméabilité à l'eau d'une membrane polymère poreuse et/ou de nettoyage d'une membrane polymère poreuse comprenant l'étape consistant à mettre en contact ladite membrane polymère poreuse avec une source de monopersulfate et un ion halogénure.

2. Procédé selon la revendication 1 consistant à mettre la membrane polymère poreuse simultanément en contact avec une source de monopersulfate, un halogénure et une base.

3. Procédé selon l'une quelconque des revendications précédentes dans lequel la membrane polymère est préparée à partir d'un mélange homogène d'un polymère hydrophobe et d'un polymère hydrophile.

4. Procédé selon la revendication 3 dans lequel le polymère hydrophobe est sélectionné dans le groupe constitué de fluoropolymères, de polymères du type des polysulfones, de polyimides, de polyacrylnitriles et du chlorure de polyvinyle.

5. Procédé selon la revendication 4 dans lequel le polymère hydrophobe est un fluoropolymère sélectionné dans le groupe constitué du fluorure de polyvinylidène (PVdF) et de copolymères de PVdF.

6. Procédé selon la revendication 4 dans lequel le polymère hydrophobe est un polymère du type des polysulfones sélectionné dans le groupe constitué de la polysulfone, de la polyéthersulfone et de la polyphénylsulfone.

7. Procédé selon la revendication 3 dans lequel le polymère hydrophile est sélectionné parmi la polyvinylpyrrolidone (PVP) et des copolymères de PVP, le polyéthylèneglycol (PEG), l'oxyde de polyéthylène, l'alcool polyvinylique et l'acide polyacrylique.

8. Procédé selon l'une quelconque des revendications précédentes dans lequel la membrane polymère est une membrane à base d'un mélange homogène PVdF/PVP ou une membrane à base d'un mélange homogène PVdF/copolymères de PVP.

9. Procédé selon l'une quelconque des revendications précédentes dans lequel la membrane polymère poreuse est traitée immédiatement après coulage ou extrusion.

10. Procédé selon la revendication 9 dans lequel la membrane polymère est traitée comme une membrane humide naissante.

11. Procédé selon l'une quelconque des revendications précédentes dans lequel la source de monopersulfate est du monopersulfate de potassium conjugué à du sulfate d'hydrogène et de potassium, et à du sulfate de potassium, de préférence un sel triple de formule KHSO₅·KHSO₄·K₂SO₄.

12. Procédé selon l'une quelconque des revendications précédentes dans lequel la concentration de monopersulfate est de l'ordre de 0,1 % en poids à 10 % en poids.

13. Procédé selon la revendication 12 dans lequel la concentration de monopersulfate est de l'ordre de 0,2 % en poids à 5 % en poids.

14. Procédé selon l'une quelconque des revendications précédentes dans lequel la membrane polymère poreuse est traitée au monopersulfate en présence de 0,004 % à 0,5 % d'ions chlorure.

15. Procédé selon la revendication 14 dans lequel la membrane polymère poreuse est traitée au monopersulfate en présence de 0,004 % à 0,1 % d'ions chlorure.

16. Procédé selon l'une quelconque des revendications précédentes dans lequel l'étape de mise en contact de ladite membrane polymère poreuse avec une source de monopersulfate et un ion halogénure consiste par ailleurs à mettre en contact ladite membrane polymère poreuse avec un tampon ou une base sélectionné(e) parmi le bicarbonate, le carbonate ou leurs mélanges.

17. Procédé selon l'une quelconque des revendications précédentes dans lequel la solution de monopersulfate comprend par ailleurs un additif, de préférence un acide organique tel que l'acide citrique et/ou un ion métal, tel que Ni²⁺, Cu²⁺ ou Fe²⁺.

18. Procédé selon la revendication 17 dans lequel l'additif est un acide organique et/ou un ion métal.

19. Procédé selon l'une quelconque des revendications précédentes, exécuté à une température comprise entre 5 °C et 95 °C.

20. Procédé selon l'une quelconque des revendications précédentes, exécuté à une température comprise entre 15 °C et 60 °C.

21. Procédé selon l'une quelconque des revendications précédentes dans lequel on met la membrane en contact avec la solution monopersulfate/halogénure et on la laisse absorber la solution.

22. Procédé selon l'une quelconque des revendications précédentes dans lequel l'ion halogénure est un ion chlorure.

23. Polymère poreux hydrophilisé préparable au moyen du procédé selon l'une quelconque des revendications précédentes.
